# EUROPEAN PATENT APPLICATION

(11) **EP 1 727 062 A1**
(43) Date of publication of application: **29.11.2006**
(21) Application number: 06250717.3
(22) Date of filing: 10.02.2006
(51) Int. Cl.: G06F 17/30

(54) **Method and system for browsing multimedia document, and computer program**

(30) Priority: 21.02.2005 JP 2005044515
(71) Applicant: Ricoh Company, Ltd., Tokyo 143-8555 (JP); National Institute of Information and Communications Technology Incorporated Administrative Agency, Koganei-shi, Tokyo 184-8795 (JP)
(72) Inventor: Araki, Tadashi, Ohta-ku Tokyo 143-8555 (JP); Kato, Ai, Ohta-ku Tokyo 143-8555 (JP); Stejic, Zoran, Ohta-ku Tokyo 143-8555 (JP); Ogawa, Yashushi, Ohta-ku Tokyo 143-8555 (JP); Miyamori, Hisashi, National Inst. Of Inf. and Com., Koganei-shi Tokyo 184-8795 (JP); Minakuchi, Mitsuru, National Inst. Of Inf. and Com, Koganei-shi Tokyo 184-8795 (JP); Tanaka, Katsumi, National Inst. Of Inf. and Com., Koganei-shi Tokyo 184-8795 (JP)
(74) Representative: Leeming, John Gerard

(57) **Abstract**

A system for browsing a document includes an object storing unit (21) that stores an object forming the document and to be zoomed on a display; a display-description storing unit (22) that stores a description indicative of a display condition on which the document is to be displayed; an operation acquiring unit (31) that acquires information on an operation performed on the document by a viewer; and a display control unit (32) that reads out an object from the object storing unit (21) to display the object based on the information on the operation and the description, as the document.

## Description

The present invention relates to a method and a system for browsing contents in a multimedia document, and a computer program.

In recent years, documents, such as a report, minutes, and a memorandum, used in an office are created in a form of multimedia document in which various objects created using a variety of media, such as a text, a still image, and a moving image, are included. However, there are some problems in browsing and editing such multimedia documents with a conventional browser.

First, a screen structure is fixed. When all pieces of information are displayed on one page, visibility is deteriorated. Moreover, since the screen structure is fixed, it is impossible to flexibly control preciseness in displaying an object of one media and a display balance for objects of different kinds of media (for example, a text and an image) according to preference of a viewer or according to a browsing apparatus.

Second, pieces of information related to each other are displayed on different pages. When documents including information related to each other are associated using hyperlink, the documents are displayed on different pages. Therefore, a position of focused information in the entire information or a context of the documents browsed becomes unclear.

Third, it takes time and labor to edit and create such multimedia document. It is necessary to examine a layout and a display size of a page in detail to create the multimedia document. Moreover, it is necessary to create all pages to be a link source and a link destination should be completed before creating the multimedia document.

In technologies disclosed in, for example, Japanese Patent Application Laid-Open Nos. 2000-172248, 2003-76718, and 2003-330856, a zooming metaphor is used to solve a part of the above problems.

In a technology disclosed in Japanese Patent Application Laid-Open No. 2000-172248, electronic documents having a hypertext structure are arranged in a single virtual space based on a link structure, and displayed on a screen created based on a view defined in the virtual space. A view is successively changed in accordance with an instruction of a viewer and images to be displayed are successively created based on the view on a real time basis. Thus, the viewer can browse the documents following the links or successively enlarging the documents while changing the view in the virtual space.

In a technology disclosed in Japanese Patent Application Laid-Open No. 2003-76718, a browser system includes a storing unit that stores document information contents (hereinafter, "contents"), a generating unit that generates a content profile for a content search, and a map-arrangement determining unit that arranges thumbnails including link information indicative of contents based on the content profile. The browser system further includes a map stroll unit, a filtering unit, and a presenting unit. The map stroll unit provides functions of a zoom-in, a zoom-out, and a panning of the thumbnails on a map. The filtering unit presents a thumbnail that satisfies a predetermined condition on the map. The presenting unit presents outlines and details of contents to a viewer according to a click operation on the thumbnails. Thus, the viewer can browse outlines and details of document information contents while strolling in an information space as if the viewer strolls on a map.

In a browser system disclosed in Japanese Patent Application Laid-Open No. 2003-330856, a zoom-condition determining unit determines a zoom condition according to an input from an input device, content-layout generating unit generates a content layout according to the zoom condition, a meta-information-layout generating unit dynamically generates a meta-information layout according to the zoom condition and the content layout generated, and a display unit displays the content layout, the meta-information layout, and a pointer superimposed. According to the browser system, it is possible to secure consistency of the content layout and the meta-information layout even when the content layout dynamically varies.

However, according to the electronic information display method disclosed in Japanese Patent Application Laid-Open No. 2000-172248, assuming browse of a hypertext in a three-dimensional virtual space, a certain piece of electronic information is zoomed to superimpose other pieces of electronic information associated with the piece of electronic information in advance on the piece of electronic information in a predetermined size. However, Japanese Patent Application Laid-Open No. 2000-172248 does not refer to other zooming display methods and lacks flexibility in the display method.

According to the document information browser system disclosed in Japanese Patent Application Laid-Open No. 2003-76718, the zooming metaphor is used to inspect two-dimensionally planar content thumbnails. However, contents to be displayed are limited to thumbnails and content keywords and zooming of various kinds of information is not taken into account.

Moreover, according to the browser system disclosed in Japanese Patent Application Laid-Open No. 2003-330856, two kinds of layouts, namely, the content layout and the meta-information layout are defined and the zooming metaphor is applied to the layouts. However, it is necessary to section contents and meta-information in advance. Thus, it takes time and labor to prepare and classify data.

It is an object of the present invention to at least partially solve problems in the conventional technology.

A system according to one aspect of the present invention is for browsing a document. The system includes an object storing unit configured to store an object forming the document and to be zoomed on a display; a display-description storing unit configured to store a description indicative of a display condition on which the document is to be displayed; an operation acquiring unit configured to acquire information on an operation performed on the document by a viewer; and a display control unit configured to read out an object from the object storing unit to display the object based on the information on the operation and the description, as the document.

A method according to another aspect of the present invention is of browsing a document. The method includes storing an object to be zoomed on a display, the object forming the document; storing a description indicative of a display condition on which the document is to be displayed; acquiring information on an operation performed on the document by a viewer; and reading out an object to display the object based on the information on the operation and the description, as the document.

A computer-readable recording medium according to still another aspect of the present invention stores a computer program for realizing the method according to the above aspect.

The other objects, features, and advantages of the present invention are specifically set forth in or will become apparent from the following detailed description of the invention when read in conjunction with the accompanying drawings, in which:
Fig. 1 is a schematic for illustrating a system configuration according to a first embodiment of the present invention;
Fig. 2 is a block diagram of a general personal computer;
Fig. 3 is a block diagram of a server and a client;
Fig. 4 is a schematic for illustrating screen transition in browsing a multimedia document;
Fig. 5 is a schematic of a multimedia document displayed on a display according to a second embodiment of the present invention;
Fig. 6 is a schematic of a display obtained as a result of a zoom-in operation performed on an object A in the multimedia documents shown in Fig. 5;
Fig. 7 is a schematic of a display obtained as a result of a zoom-in operation performed on the object A in the multimedia documents shown in Fig. 6; and
Fig. 8 is a schematic for illustrating screen transition while browsing multimedia documents according to a third embodiment of the present invention.

Exemplary embodiments of the present invention are described below in detail with reference to the accompanying drawings.

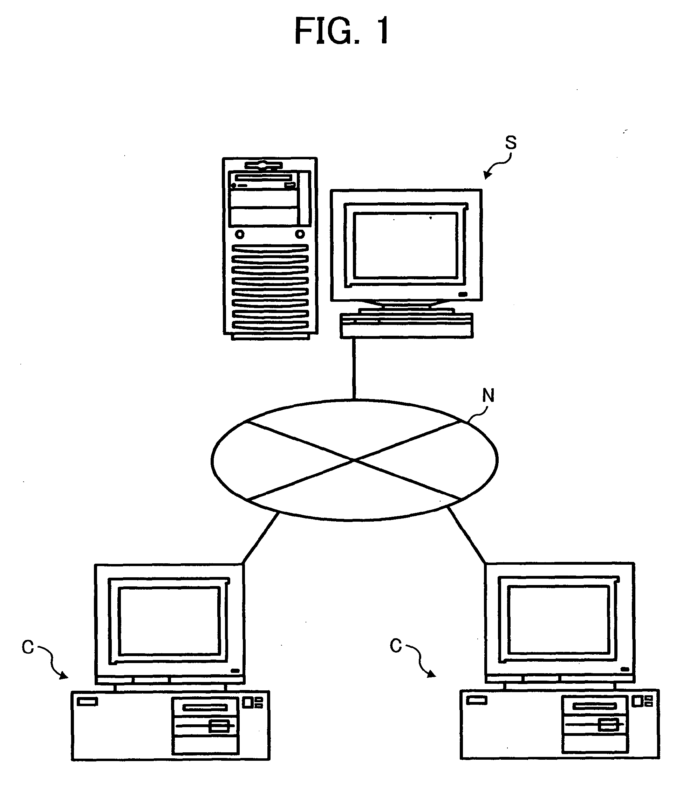

Fig. 1 is a schematic for illustrating a system configuration according to a first embodiment of the present invention. In a browser system according to the present embodiment, clients C are connected to a server S via a network N such as a local area network (LAN). The server S is a computer that provides services to the clients C. The clients C are computers that are operated by a viewer to receive the services. The server S and the clients C are general personal computers.

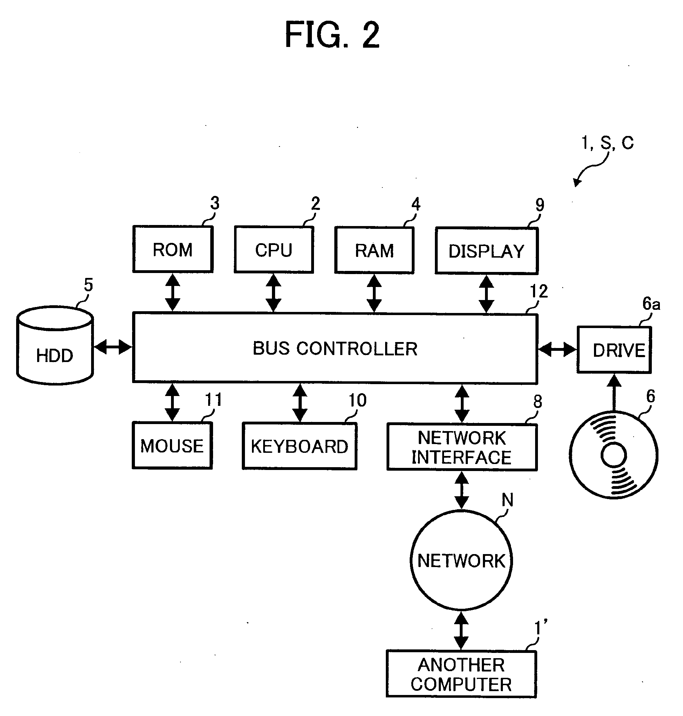

Fig. 2 is a block diagram of a general personal computer 1. The personal computer (hereinafter, "computer") 1 includes a central processing unit (CPU) 2, a read only memory (ROM) 3 that stores a basic input output system (BIOS), a first storage such as a random access memory (RAM) 4 that temporarily stores information during processing, a second storage such as a hard disk drive (HDD) 5 that stores an application program, a processing result, and the like, a drive 6a for a removable medium 6 serving as a storage medium for storing information on the outside or distributing information to the outside or obtaining information (an application program, etc.) from the outside, a network interface 8 for connection to the network N to communicate with external computers 1', a display 9 that displays a progress and a result of a processing, a keyboard 10, and a mouse 11, that are used by an operator to input an instruction and information, to the computer 1. A bus controller 12 controls data communication among the above components.

Various storage media may be used as the removable medium 6. The storage media includes a magnetic storage medium, such as a flexible disk, a hard disk, or a magnetic tape; a magneto-optical storage medium, such as an magneto-optical disc (MO); an optical storage medium, such as a compact disk (CD), a compact-disk read-only memory (CD-ROM), a compact-disk recordable (CD-R), a compact-disk rewritable (CR-RW), a digital-versatile-disk read-only memory (DVD-ROM), a digital-versatile-disk recordable (DVD-R), a digital-versatile-disk random-access memory (DVD-RAM), a digital-versatile-disk rewritable (DVD-RW), and a digital-versatile-disk rewritable (DVD-RW), and a semiconductor memory.

In data transmission, data is transmitted to the network interface 8, and the network interface 8 outputs a signal to the network N. The network interface 8 judges whether the data received by the network interface 8 is necessary. The network interface 8 captures the data if the data is necessary, and discards the data if the data is unnecessary.
Transmission and reception of all data are performed through the network interface 8.

In general, when a viewer turns on a power of the computer 1, the CPU 2 starts a program called loader included in the BIOS in the ROM 3, and reads an operating system (OS) for managing hardware and software of the computer 1 into the RAM 4 from the HDD 5. When the OS is started, the OS supports start of an application program, reading and storing information according to operation by the viewer. Windows (trademark of Microsoft Corporation) or UNIX (trademark of X/Open, Inc.) are representative examples of the OS. An application program operates on the OS. The application program is not limited to an application program operating on a predetermined OS and may be an application program that causes the OS to execute a part of processing, or may be an application program included as a part of a group of program files constituting predetermined application software, OS, or the like.

In general, when the application program installed, the application program recorded in the removable medium 6 is installed in the HDD 5. Therefore, the removable medium 6 could be a recording medium that stores the application program. The application program may be obtained from the outside via, for example, the network interface 8 and installed in the HDD 5.

In the computer 1 (the server S and the clients C), when the application program is started to operate on the OS, the CPU 2 executes various kinds of arithmetic processing to centrally control the respective units according to the application program.

A feature processing according to the present embodiment makes it possible to view detailed information when one object in a multimedia document is specified to be zoomed in. For example, one object formed with text is specified from an initial screen to be zoomed in, text including more detailed information, related photographs, a movie, and sound information are presented.

The server S (the computer 1) stores a content storing program in the HDD 5. In the server S, when the content storing program is started, the CPU 2 performs executes a content storage processing according to the content storing program.

On the other hand, the client C (the computer 1) stores a content browser program in the HDD 5. In the client C, when the content browser program is started, the CPU 2 executes a content browsing processing according to the content browser program.

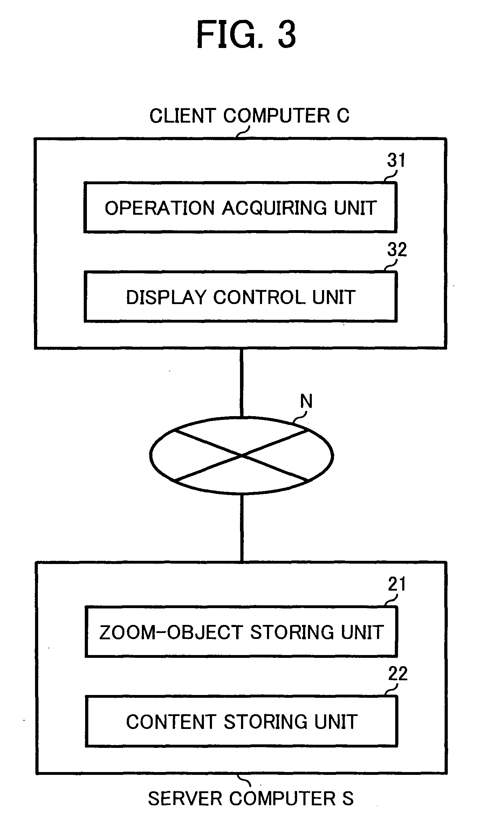

Fig. 3 is a block diagram of the server S and the client C. As shown in Fig. 3, the server S realizes a zoom-object storing unit 21 and a content storing unit 22 by executing the content storing program by the CPU 2. On the other hand, the client C realizes an operation acquiring unit 31 and a display control unit 32 by executing the content browser program.

The zoom-object storing unit 21 stores a media object formed with a single type of media, such as a text, a still image, a moving image, and a sound, in a multimedia document. The zoom-object storing unit 21 is stored in, for example, the HDD 5. The media object is a zoom object on which a zooming operation is performed.

The content storing unit 22 stores display descriptions (hierarchy description and zooming description) for the multimedia document. The content storing unit 22 is stored in, for example, the HDD 5. The hierarchy description and the zooming description are described in a language based on an extensible markup language (XML), and has the following characteristics:
(A) It is possible to describe zoom operation/behavior of media objects forming a multimedia document. An object to be zoomed is such an object that is formed with at least one media object, that includes therein at least one object to be zoomed, or that is formed in combination of the above two cases.
(B) It is possible to describe a display condition of media objects with continuous values representing a degree of zoom as a parameter (a zoom rate (zoon-in, zoom-out)) to perform precise control of a display form. The zoom rate is continuous values equal to or larger than 0.0 and equal to or smaller than 1.0 representing a degree of zoom and changes according to zooming operation. The zoom rate is uniquely decided for each zoom object. Note that zooming in a direction in which the zoom rate increases is referred to as zoom-in and zooming in a direction in which the zoom rate decreases is referred to as zoom-out.
(C) It is possible to describe the display condition for each of the media objects: a text, a still image, a moving image, and a sound.
(D) It is possible to describe an initial state of the display condition. For example, the initial state indicates an initial zoom rate at which each of zoom objects forming a multimedia document is first displayed.
(E) To perform natural zooming, for example, from a media object of a higher hierarchy to a media object of a lower hierarchy corresponding to a hierarchical structure in a multimedia document, it is possible to describe succession of zooming operation between the hierarchies. The succession includes zoom-out of a media object in synchronization with zoom-in of another media object. The succession of zooming operation is performed such that when one zoom object is zoomed, another zoom object is zoomed in association with the zooming operation of the zoom object. Zooming is defined in two meanings. First, zooming is a seamless change in preciseness of media objects. More specifically, zooming continuously changes preciseness concerning time, a space, and content in media objects of the same type. For example, zooming is a change in size of a still image. Second, zooming is seamless transition of a medium. More specifically, zooming continuously controls transition from a display of one media object to a display of another media object of a different kind including related information. For example, zooming includes transition of objects from a still image to a moving image or a sound. Actually, zooming in the first meaning and zooming in the second meaning may be used simultaneously.
(F) A parameter for controlling a relation of a display conditions (a degree of zoom) of a media object at a succession source and a succession destination in the succession of zoom is introduced. A function representing a relation between a zoom rate of a zoom object at the succession source and a zoom rate of the zoom object at the succession destination is referred to as a zoom rate function.
(G) It is possible to describe various initial-screen settings so that a display condition can be changed depending on a viewer or a browsing condition. Although there is only one page to be displayed, variation can be applied by switching a zooming condition at the time of initial access.
(H) For adaptation to existing contents in a multimedia document, it is possible to describe a zoom operation independently from a hierarchical structure of contents.

Major elements of zooming description language are the "media object", the "zoom object", the "zoom rate", and the "zoom rate function".

### 1. Designation of a media object

A text, a still image, a moving image, and a sound are represented by tags <text/>, <img/>, <video/>, and <audio/>, respectively. Specific contents of a text and source files are designated by the tags.

### (Example 1)

<text id=text1>This is a text.</text>
<img id=img1 src="img1.jpg"/>
<video id=videol src="video1.mpg"/>
<audio id=audio1 src="audio1.wav"/>

### 2. A range of a zoom rate

A maximum value and a minimum value of a zoom rate are designated by a zoomFactor attribute in a <div/> tag to represent a range of the zoom rate as a continuous parameter.

### (Example 2)

<div zoomFactor="0.0 0.5"/>

### 3. Display of a media object

A text, a still image, a moving image, and a sound are represented by tags <dispText>, <dispImg>, <dispVideo>, and <dispAudio>, respectively. The tags represents a display condition of each media object at a zoom rate in a range always included in a <div/> tag and designated by the <div/> tag.

### (Example 3-1)

<div zoomFactor="0.0 0.5">
<dispText id=disptext1" textId="text1" fontSize="10pt 14pt"/>
</div>

The above means that a text designated by "text1" in a <text/> tag is displayed with a font size of 10pt when the zoom rate is 0.0 and displayed with a font size of 14pt when the zoom rate is 0.5 and the font size is changes as smoothly as possible between the zoom rate of 0.0 and the zoom rate of 0.5.

### (Example 3-2)

<div zoomFactor="0.0 0.5">
<dispImg id="dispimg1" imgId="img1" imgSize="10% 50%"/>
</div>

The above means that a still image designated by "imgl" in a <img1/> tag is displayed with a maximum size of 10% when the zoom rate is 0.0 and with a maximum size of 50% when the zoom rate is 0.5 and a size of the still image is changed as smoothly as possible between the zoom rate of 0.0 and the zoom rate of 0.5.

### (Example 3-3)

<div zoomFactor="0.0 0.5">
<dispVideo id="dispvideo1" videoId="Video1" start="0" end="300" videoSize="10% 50%"/>
</div/>

The above means the first frame to the three hundredth frame of a moving image designated by "video1" in a <video/> tag is displayed with a maximum size of 10% when the zoom rate is 0.0 and with a maximum size of 50% when the zoom rate is 0.5 and a size of the moving image is changed as smoothly as possible between the zoom rate of 0.0 and the zoom rate of 0.5.

### (Example 3-4)

<div zoomFactor="0.0 0.5">
<dispAudio id="dispaudiol" audiold="audiol" start="0s" end="30s"/>
</div>

The above means that a sound from the start to 30 seconds designated by "audio1" in a <audio/tag> is reproduced while a zoom rate is 0.0 to 0.5.

### 4. Zoom object

A zoom object is described by a <zoomObject/> tag. An initial zoom rate, a zoom object at a zoom succession destination, and a zoom rate function are described by attributes in the tag. A <div/> tag or another <zoomObject/> tag is always included.

The operation acquiring unit 31 acquires information on an operation designated by a viewer. For example, a zooming operation is performed on an object by dragging the mouse 11 while selecting the object. In this case, zoom-in is performed when the mouse 11 is dragged downward on a display surface of the display 9 and zoom-out is performed when the mouse 11 is dragged upward on the display surface of the display 9.

The display control unit 32 reads out media objects from the zoom-object storing unit 21 based on the operation designated by the viewer and the display description (the hierarchy description and the zooming description) stored in the content storing unit 22, and controls a setting of display/non-display and preciseness on the display 9 for the media objects, an automatic setting of display positions, display of frame lines around the media objects, and the like. More specifically, the display control unit 32 performs the setting of display/non-display and preciseness of media objects displayed on the display 9 by interpreting the display description (the zooming description) stored in the content storing unit 22 and performing zooming display.

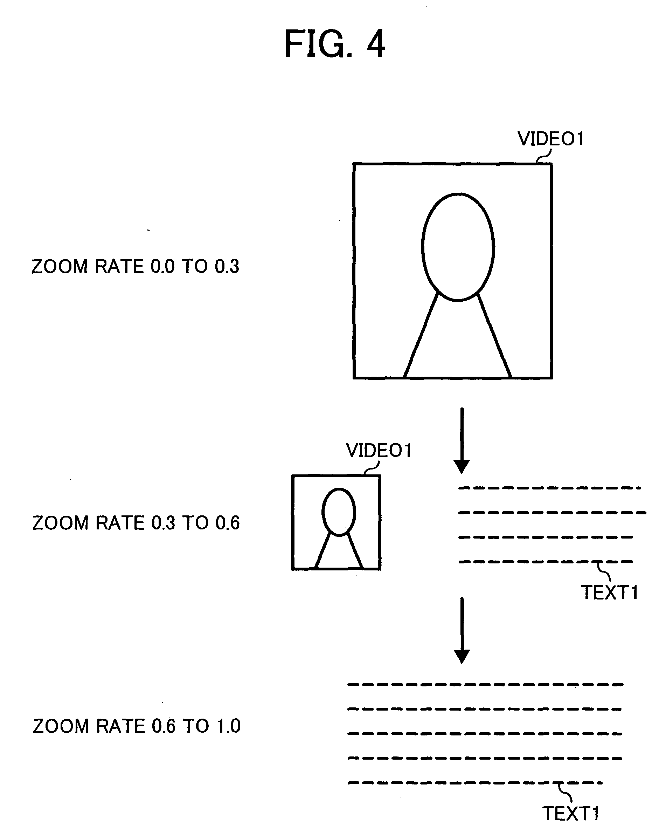

Fig. 4 is a schematic for illustrating screen transition in browsing multimedia documents. According to the example of screen transition shown in Fig. 4, only "video1" is displayed at a zoom rate equal to or lower than 0.3, both "video1" and "text1" are displayed at a zoom rate equal to or higher than 0.3 and equal to or lower than 0.6, and only "text1" is displayed at a zoom rate equal to or higher than 0.6. Zooming description for the screen transition shown in Fig. 4 is described below.
<zoomObject id="zoom1" initZoomFactor="0.0">
<div zoomFactor="0.0 0.3">
<dispVideo id="dispvideo1" videoId="video1".../>
</div>
<div zoomFactor="0.3 0.6">
<dispVideo id="dispvideo2" videoId="video1".../>
<dispText id=disptext1" textId="text1".../>
</div>
<div zoomFactor="0.6 1.0">
<dispText id="disptext2" textID="text1".../>
</div>
</zoomObject>>

According to the zoom description, an initial zoom rate of a zoom object "zoom1" is 0.0. The zoom object "zoom1" includes "video1" and "text1". Only "video1" is displayed at a zoom rate lower than 0.3, both "video1" and "text1" are displayed at a zoom rate equal to or higher than 0.3 and equal to or lower than 0.6, and only "text1" is displayed at a zoom rate equal to or higher than 0.6.

When it is desired to change the initial zoom rate depending on a viewer or a browsing condition, it is possible to set the initial zoom rate by a <initZoomFactorTable/> tag. In an initZoomFactor attribute of a <zoomObject/> tag, a setting reference destination is described instead of the initial zoom rate. Zooming description with different initial zoom rate depending on a viewer or a browsing condition state is described below.
<zoomobject id="zoom1" initZoomFactor="ref: table1">
<div zoomFactor="0.0 0.3">
<dispVideo id="dispvideo1 "videoed="video1".../>
</div>
<div zoomFactor="0.3 0.6">
<dispVideo id="dispvideo2" videoed="video1".../>
<dispText id="disptext1" textId="text1"..../>
</div>
<div zoomFactor="0.6 1.0">
<dispText id="disptext2" textId="text1".../>
</div>
</zoomObject»
<initZoomFactorTable id="table1" defValue="0.0">
viewer1 0.1;
viewer2 0.3;
cond1 0.7;
</initZoomFactorTable>

According to the zooming description, "zoom1" refers to "table1" as setting of the initial zoom rate. In "tablel", when "viewer1" and "viewer2" browse under condition "cond1", the initial zoom rate is 0.1, 0.3, and 0.7, respectively. As an initial screen, when "viewer1" browses, a condition at the upper stage in Fig. 4 is displayed, when "viewer2" browses, a condition at the middle stage in Fig. 4 is displayed, and when the condition is "cond1", a condition at the lower stage in Fig. 4 is displayed. In other cases, the initial zoom rate is 0.0.

In this way, according to this embodiment, the browser system reads out media objects based on an operation designated by a viewer and a display description indicating a display condition that are acquired by the operation acquiring unit 31, changes a display form of the media objects to form a multimedia document. The browser system causes the display 9 to display the formed multimedia document. Consequently, the multimedia document including a set of the media objects dynamically changes a form according to the operation designated by the viewer and the display description. Thus, necessity and importance of examining a fixed layout are decreased. As a result, it is possible to reduce a burden on an editor that edits the contents of the multimedia document. It is also possible to secure a degree of freedom for a viewer in displaying the contents.

Since the display description includes the hierarchy description concerning a display form and the zooming description for media objects, it is possible to change preciseness using zooming. Thus, it is also possible to view pieces of information equivalent to each other with a favorite media object or a display balance, and to change the display form of the contents depending on a viewer or a browsing condition. Since the zooming description is stored together with the hierarchy description, the browser system is not limited to a specific application. It is possible to easily describe zoomable contents on which an intention of a creator is reflected. Moreover, since the zooming description is included in the content storing unit 22, it is possible to position zooming as a third web-browsing operation as a scroll and an anchor click and generically apply zooming operation to general web contents. Furthermore, since the hierarchy description and the zooming description are separated, it is possible to apply zooming operation to existing contents in a multimedia document. Moreover, since it is possible to reflect an intension of a content creator concerning zooming and guide a viewer, it is possible to prevent the viewer from losing his/her way while browsing (forgetting where an enlarged object is located in entire contents).

Components identical with those in the first embodiment are denoted by the identical reference numerals and signs and explanations of the components are omitted.

In this embodiment, an example of zoom succession at the time when a zoom rate function takes a positive value is explained.

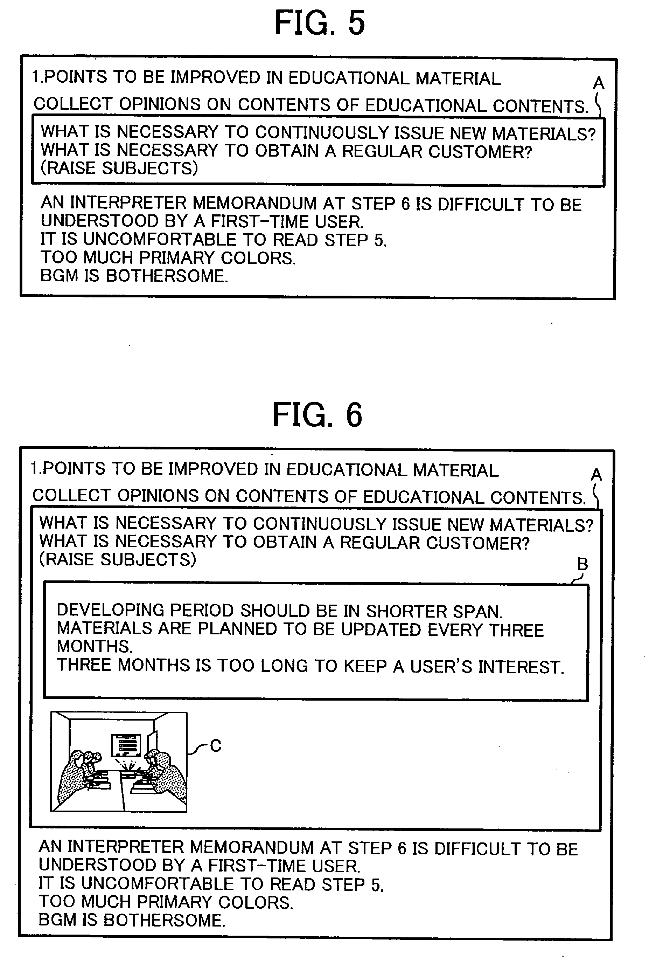

Figs. 5 to 7 are schematics for illustrating screen transition in browsing a multimedia document. Fig. 5 is a schematic of multimedia document displayed on the display 9. The example shown in Fig. 5 is a "business trip report". The multimedia document shown in Fig. 5 is formed mainly with an object of text.

A result obtained by applying zoom-in operation to an object A in the multimedia document shown in Fig. 5 is shown in Fig. 6. As shown in Fig. 6, when the zoom-in operation is applied to the object A, an object B below the object A is displayed and a new object C appears below the object B. The new object C is one frame in a moving image obtained by recording a discussion scene at a point when a discussion related to the object A is held.

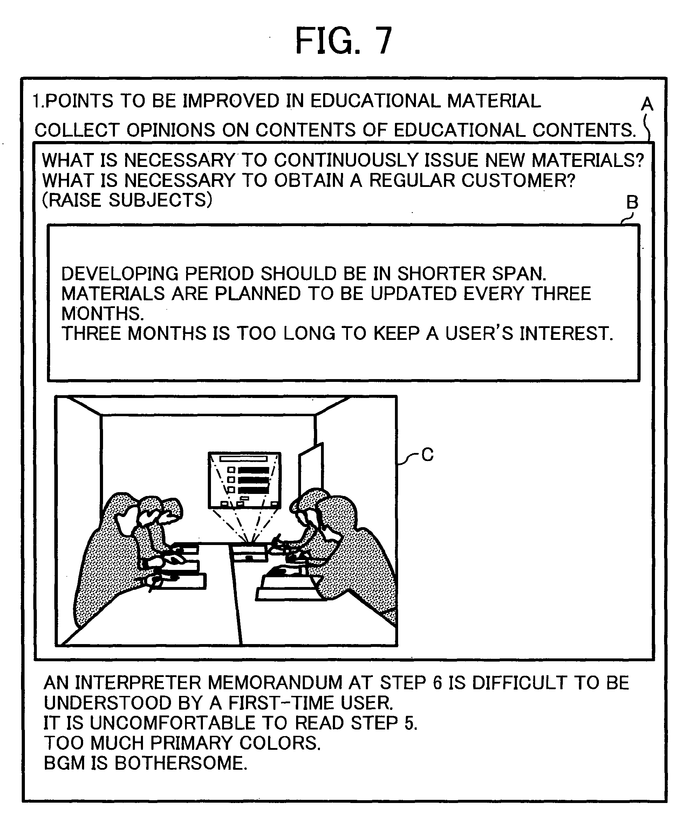

A result obtained by applying the zoom-in operation to the object A shown in Fig. 6 is shown in Fig. 7. As shown in Fig. 7, when the zoom-in operation is applied to the object A, font sizes of the objects A and B are increased. In addition, as shown in Fig. 7, when the zoom-in operation is applied to the object A of the multimedia documents, preciseness of the image of the object C, is increased (an image size is increased). Moreover, when the object C is enlarged to a certain size, a moving image (and a sound) is started to be played.

A hierarchy description and a zooming description for the screen transition shown in Figs. 5 to 7 are described below.
In the following description, the hierarchy description and the zooming description are described separately (onlyHierarchy="on" indicates that only a hierarchy is described).

### Hierarchy description

<zoomObject id="zoom1" onlyHierarchy="on">
<text id="text1">1. Points to be iMPROVEd in educational MATERIAL</text>
<text id="text2">Collect opinions on contents of educational materials from participants.</text>
<zoomobject id="zoom2" onlyHierarchy="on">
<text id="text3">what is necessary to continuously issue new materials? What is necessary to obtain a regular customer? (raise subjects)</text>
<zoomObject id="zoom3" onlyHierarchy="on">
<text id="text4">Developing period should be in shorter span.</text>
<text id="text5">Materials are planned to be updated every three months.</text>
</zoomObject>
<zoom0bject id="zoom4" onlyHierarchy="on"
<video id="video1 src=meeting11.mpg"/>
</zoomObject>
</zoomObject>
<zoomObject id="zoom5" onlyHierarchy="on">
<text id="text10">An interpreter memorandum at step 6 is difficult to be understood by a first-time user.</text>
</zoomObject>
</zoomObject>
Zooming description
<zoomObject id="zoom1" initZoomFactor="0 . 0"
relatedTo="children:0.8">
<div zoomFactor="0.0 1.0">
<dispText id="disptext1" textId="text1"
textSize="12pt 14pt"/>
<dispText id="disptext2" textID="text2"
textSize="12pt 14pt"/>
</div>
</zoomObject>
<zoomObject id="zoom2" initZoomFactor="0.0"
relatedTo="children:0.8">
<div zoomFactor="0.0 1.0">
<dispText id="disptext5" textId="text3"
textSize="11pt"/>
</div>
</zoomObject>
<zoomObject id="zoom3" initZoomFactor="0.0"
relatedTo="brother:-0.5">
<div zoomFactor="0.1 1.0">
<dispText id="disptext6" textId="text4" textSize="8pt 10pt"/>
<dispText id="disptext7" textId="text5"
textSize="8pt 10pt"/>
</div>
</zoomObject>
</zoomObject id="zoom4" initZoomFactor="0.0"
relatedTo="brother:-0.5">
<div zoomFactor="0.1 0.4">
<dispVideo id="dispvideo1" videoId="video1"
start="0" end="0" videoSize="20% 50%"/>
</div>
<div zoomFactor="0.4 1.0">
<dispVideo id="dispvideo2" videoId="video1"
start="0" end="900" videoSize="50% 100%"/>
</div>
</zoomObject>

According to the hierarchy description, there is "zoom1" at the top, there are "zoom2" and "zoom5" below "zoom1", and there are "zoom3" and "zoom4" below "zoom2". "zoom3" includes plural texts (text4, text5, etc.) and "zoom4" includes one moving image ("video1").

According to the zooming description, initial zoom rates of all "zoom1", "zoom2", "zoom3", and "zoom4" are 0.0.
However, whereas texts ("text1", "text2", and "text3") are displayed in the former two zooms from the beginning, no text is displayed in the latter two zooms (this corresponds to the initial state in Fig. 5).

When zoom-in is applied to "zoom2", zoom-in is successively performed on a zoom object in child hierarchies (relatedTo="children: 0.8"). Zoom rates of "zoom3" and "zoom4" increase at a rate of change of 0.8 of an increase in a zoom rate of "zoom2" (when the zoom rate of "zoom2" changes +0.5, "zoom3" and "zoom4" change +0.4, respectively). When the zoom rates reach 0.1, text4, text5, and the like and "video1" are displayed, respectively (see Fig. 6). This is an example of media expansion because moving image information is added to text information. However, concerning "videol", only a frame 0 is still displayed in a stationary state.

When zoom-in is further applied to "zoom2" from this state, the zoom rates of "zoom3" and "zoom4" are further increased and font sizes of text4, text5, and the like are increased. A display size of "video1" is increased simultaneously and frames 0 to 900 of "video1" are reproduced at a point when the zoom rate of "zoom4" reaches 0.4 (Fig. 7, an example of a minuteness change).

When zoom-out is applied to "zoom2" in a state of Fig. 7, contrary to the case of zoom-in, both "zoom3" and "zoom4" are subjected to zoom-out and a screen changes to the state in Fig. 6. When the respective zoom rates are lower than 0.1, text4, text5, and the like and "video1" disappear from the screen and the screen returns to the state in Fig. 5. When operation for returning the screen to the initial state is forcibly performed, the screen returns to the state in Fig. 5 from any display state.

According to this embodiment, in the zooming description, it is possible to describe succession of zoom between zoom objects in which, when one media object is zoomed, the other zoom object is zoomed corresponding to the zooming of the zoom object. Thus, it is possible to perform natural zooming from one zoom object to the other zoom object.

Components identical with those in the first embodiment or the second embodiment are denoted by the identical reference numerals and signs and explanations of the components are omitted in a third embodiment of the present invention.

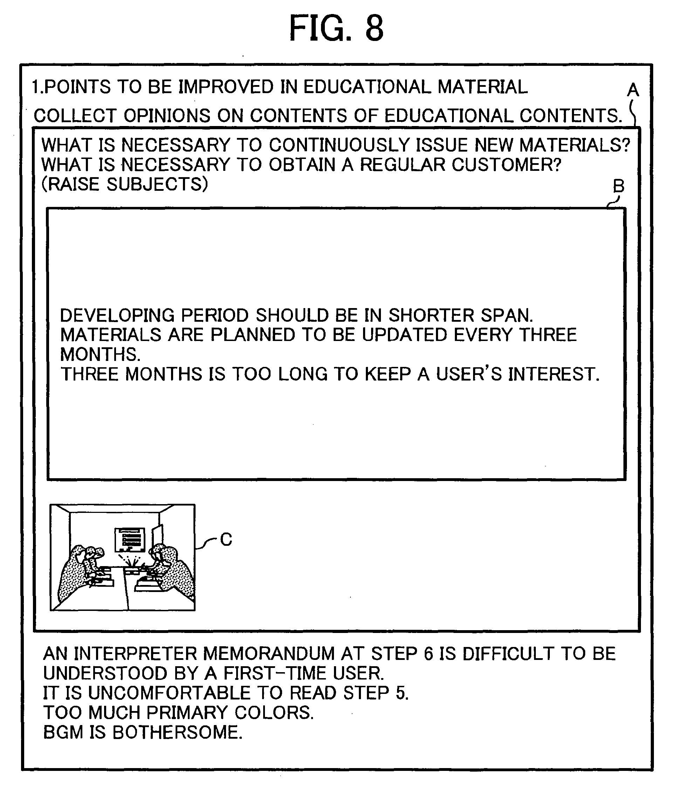

Fig. 8 is a schematic for illustrating screen succession in browsing a multimedia document. A result obtained by applying zoom-in operation to the object B of the multimedia documents shown in Fig. 7 is shown in Fig. 8. As shown in Fig. 8, when the zoom-in operation is applied to the object B of the multimedia documents, a font size of the object B is increased but a display size of the object C is reduced.

In the zooming description explained in the second embodiment, there is a description relatedTo="brother:
- 0.5" in both "zoom3" and "zoom4". This represents that zoom succession of zoom occurs between zoom objects having a common parent. The negative value of the zoom rate function indicates that one of "zoom3" and "zoom4" is subjected zoom-in, the other is subjected to zoom-out. Thus, when only "zoom3" is selected from the state in Fig. 7 and subjected to zoom-in, "zoom4" is subjected to zoom-out (text4, text5, and the like are further expanded and, conversely, "video1" is reduced (see Fig. 8)).

According to this embodiment, in the zooming description, it is possible to describe succession of zoom between zoom objects in which, when one media object is zoomed, the other zoom object is zoomed in association with the zooming of the zoom object. Thus, it is possible to perform natural zooming from one zoom object to the other zoom object.

According to the embodiments described above, it is possible to reduce a burden on an editor of contents in a multimedia document. It is also possible to secure freedom for a viewer in displaying the contents.

Moreover, according to the embodiments described above, it is possible to change preciseness in displaying the contents. It is also possible to browse pieces of information equivalent to each other with a favorite zoom object or a display balance and to change the display form of the contents depending on a viewer or a browsing condition. Furthermore, it is possible to easily describe zoomable contents on which an intention of a creator is reflected. Moreover, it is possible to generically apply zooming operation to general web contents. Furthermore, it is possible to apply zooming operation to existing contents. Moreover, it is possible to prevent the viewer from losing his/her way while browsing a multimedia document.

Furthermore, according to the embodiments described above, it is possible to perform precise control on a display form.

Moreover, according to the embodiments described above, it is possible to perform natural zooming from one zoom object to the other zoom object.

Furthermore, according to the embodiments described above, it is possible to switch, for example, a zooming condition of a display at an initial access.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

The present document incorporates by reference the entire contents of Japanese priority document, 2005-044515 filed in Japan on February 21, 2005.

## Claims

1. A system for browsing a document, comprising:
an object storing unit (21) configured to store an object to be zoomed on a display, the object forming the document;
a display-description storing unit (22) configured to store a description indicative of a display condition on which the document is to be displayed;
an operation acquiring unit (31) configured to acquire information on an operation performed on the document by a viewer; and
a display control unit (32) configured to read out an object from the object storing unit (21) to display the object based on the information on the operation and the description, as the document.

2. The system according to claim 1, wherein the object is any one of an object formed with a single media object and an object formed with a combination of a plurality of media objects.

3. The system according to claim 1 or 2, wherein the description includes a structure description indicative of a structural arrangement of the document and a zooming description indicative of a zooming condition of the object.

4. The system according to claim 3, wherein the zooming condition is controlled based on a parameter representing a degree of zooming.

5. The system according to claim 3, wherein, the zooming description includes a description of a successive zooming operation of objects in which a second object is zoomed together with an object to be zoomed.

6. The system according to claim 5, wherein the successive zooming operation is controlled based on a parameter representing a relation of zoom rates between the object and the second object.

7. The system according to claim 5, wherein the successive zooming operation is controlled based on a hierarchical relation between the object and the second object.

8. The system according to any one of the preceding claims, wherein
an initial state parameter is set for each object, and
an initial display structure of the document is controlled based on the initial state parameter.

9. The system according to claim 8, wherein the initial state parameter is variable.

10. A method of browsing a document, comprising:
storing an object to be zoomed on a display, the object forming the document; and
storing a description indicative of a display condition on which the document is to be displayed.

11. A method according to claim 10, further comprising:
acquiring information on an operation performed on the document by a viewer; and
reading out an object to display the object based on the information on the operation and the description, as the document.

12. A method for browsing a document, comprising:
acquiring information on an operation performed on the document by a viewer; and
reading out an object forming the document to display the object based on the information on the operation and a description indicative of a display condition on which the document is to be displayed, as the document.

13. The method according to claim 10, 11 or 12, wherein the object is any one of an object formed with a single media object and an object formed with a combination of a plurality of media objects.

14. The method according to claim 10, 11, 12 or 13, wherein the description includes a structure description indicative of a structural arrangement of the document and a zooming description indicative of a zooming condition of the object.

15. The method according to claim 14, wherein the zooming condition is controlled based on a parameter representing a degree of zooming.

16. The method according to claim 14, wherein, the zooming description includes a description of a successive zooming operation of objects in which a second object is zoomed together with an object to be zoomed.

17. The method according to claim 16, wherein the successive zooming operation is controlled based on a parameter representing a relation of zoom rates between the object and the second object.

18. The method according to claim 16, wherein the successive zooming operation is controlled based on a hierarchical relation between the object and the second object.

19. The method according to any one of claims 10 to 18, wherein
an initial state parameter is set for each object, and
an initial display structure of the document is controlled based on the initial state parameter.

20. The method according to claim 19, wherein the initial state parameter is variable.

21. A computer program for browsing a document, the computer program comprising code means that, when executed on a computer system, instructs the computer system to effect a method according to any one of claims 10 to 20.
